(19)

Europäisches Patentamt
European Patent Office
Office européen des brevets

(11) **EP 1 772 761 A1**

(12) **EUROPEAN PATENT APPLICATION**

(43) Date of publication:
**11.04.2007 Bulletin 2007/15**

(51) Int Cl.:
**G02B 17/06** (2006.01)

(21) Application number: **05021859.3**

(22) Date of filing: **05.10.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **EADS Astrium GmbH**
**81663 München (DE)**

(72) Inventors:
• **Harnisch, Bernd**
**c/o European Space Agency**
**75738 Paris Cedex 15 (FR)**

• **Holota, Wolfgang Dr.**
**85649 Otterloh (DE)**
• **Kirschner, Volker**
**c/o European Space Agency**
**75738 Paris Cedex 15 (FR)**

(74) Representative: **Hummel, Adam et al**
**EADS Deutschland GmbH**
**Patentabteilung**
**81663 München (DE)**

(54) **Ultra-wide field multiple-mirror apparatus**

(57)    A multiple-mirror apparatus comprising a first surface (1) which includes a primary mirror (M1) that reflects a beam path (30), a second surface (2) which includes a secondary mirror (M2) that reflects light reflected by the primary mirror (M1), a third surface (3) which includes a tertiary mirror (M3) that reflects light reflected by the secondary mirror (M2) and has a symmetry axis, a fourth surface (4) which includes a quaternary mirror (M4) that reflects light reflected by the tertiary mirror (M3), whereby the surfaces (1, 2, 3, 4) are arranged such that they have a common symmetry axis (Oz) which coincides with the symmetry axis of the tertiary mirror (M3).

Fig. 1

**Description**

BACKGROUND OF THE INVENTION

1. Field of the Invention

The present invention relates to the field of optical instruments, and in particular to multiple-mirror apparatus, especially reflecting telescopes having an ultra-wide field of view, above 6° x 6°.

Apparatus with ultra-wide field of view are designed for applications such as infrared imaging, spectral imaging, earth and planetary observation, and detection of fast moving faint objects.

2. Description of the Prior Art

One difficulty with all-reflective systems is to achieve good image quality over a wide field of view while minimizing the sizes of individual mirrors and the volume of the telescope package containing the mirror elements. A single mirror with an appropriately shaped surface is capable of forming a perfect geometric image of a single object point. The mathematical description of the surface of the mirror is dictated by the fundamental requirement that the length of any path from the object to the image be equal to the length of any other similar path. For an infinitely distant object point, for example, the theoretical figure, which achieves perfect geometric imagery is the paraboloid of revolution. The ideal mirror shape produces the best possible geometric image quality of a given pair of object and image conjugate points. Errors in fabrication distort the actual mirror surface from the ideal shape and cause the size of the geometric image to grow, degrading the frequency content of the image. Even in the absence of errors, diffraction resulting from the finite size of the collecting mirror aperture places an ultimate lower diffraction limit on the size of image spot for a given system. When the geometric image spot size from the ideal mirror shape with fabrication errors is smaller than the spot size caused by diffraction, the system is said to be diffraction limited. Optimum telescope systems operate near the diffraction limit to provide the highest resolution possible with the least degradation of the frequency content.

An extended object can be considered as a continuum of object points each of which is subject to distortion from perfect imaging by diffraction and optical aberrations. A single mirror surface is generally not capable of perfect imaging for more than one object point and image point. Except in special, impractical cases, a single mirror cannot from a perfect image of extended objects. Hence, optical systems must add additional reflective surfaces to provide near perfect imaging of extended objects. Additional surfaces provide additional degrees of freedom which define the shapes and locations of mirror surfaces. Thus, a multiple mirror system has a set of surfaces and spacings defining path lengths traversed by rays propagating from the object to the image. The path lengths for each point are equal for enough object points to span the required angular field of view. There is design latitude that does not significantly affect image quality because geometric spots need only be smaller that the diffraction limit. Design difficulty increases with an increase in the field of view of the object to be imaged because of the difficulty in maintaining equal path lengths for an increasing number of conjugate points. Additional mirror surfaces and more complex mirror surface shapes such as aspheric surfaces have been used to meet the demands of high quality imaging of large extended objects.

Aspheric surfaces, which cannot be represented as parts of a large sphere, include conic sections such as hyperboloids, paraboloids, ellipsoids and oblate spheroids. A conic section is one of the several possible shapes derived from an intersection of a plane with a cone. There are also general aspherics, for which the shape of the surface is represented by a general polynomial equation in one of several established forms. The use of aspheric surfaces is well known. For example, ellipsoidal and hyperboloidal mirrors are described in U.S. Pat. Nos.4,101,195 and 4,226,501. Both mild and strong aspherics have been used and are characterized by the extent of departure from spherical.

Aspheric surfaces are more difficult to manufacture than spherical surfaces and are more complicated to design as part of an optical system. Spherical mirrors are always rotationally symmetric because any section of a spherical mirror is the same as any other section. Aspheric surfaces can, however, replace several spherical surfaces for the purpose of reducing aberrations.

One prior art telescope with a wide linear field of view is shown and described in U.S. Pat. No. 4,240,707. In this prior art three-mirror-anastigmatic type telescope, high resolution imaging is achieved with an aperture stop centered on a convex secondary mirror and with concave primary and tertiary mirrors eccentric sections of larger symmetric parent reflective surfaces. The surfaces are typically aspheric, including for example, conic sections, depending on the field of view and image quality desired. With conic aspherics, linear fields of view of up to five degrees on a flat focal surface have been demonstrated. With general aspherics, linear fields up to 15 degrees have been demonstrated. The reflective triplet operates most effectively at focal lengths from three to six times the aperture size; that is, with focal ratios of f/3 to f/6. The focal ratio, often called the f-number, is the ratio of the focal length divided by the aperture diameter.

Four mirror systems are also known, for example, the one disclosed in U.S. Pat. No. 5,142,417. This document describes an f/12 to f/20 optical system with a large effective focal length. This system comprises spherical mirrors which are advantageously easy to manufacture, but disadvantageously have disjointed mirror axes resulting in a relatively small angular field of view. The disjointed mirror axes also particularly increase system complexity and alignment requirements, presenting difficult manufacturing challenges.

U.S. Pat. No. 5,640,283 also discloses a four-mirror system comprising two concave primary and tertiary mirror surfaces and two convex secondary and quaternary mirror surfaces. The tertiary and quaternary mirrors are spherical. The secondary mirror is a mild circular convex ellipsoid. This telescope is limited to a linear field of view of 6° and has a focal surface which is not flat but in the form of a concave cylinder section.

U.S. Pat. 6,767,103 also describes a four-mirror telescope with three aspheric mirrors and a spherical field mirror with a sequence concave, convex, convex, concave. This instrument is designed for high resolution imaging of a distant object, and thus has a narrow field of view of 0.4° x 0.4°.

An object of the present invention is to provide an apparatus capable of an ultra-wide field of view combined with a high imaging performance, a flat image focal plane, and a minimum distortion in all the field of view (object space). A further object of the present invention is to provide a telescope which is telecentric in image space. This means that the rays in image space are collimated (the exit pupil of the system is located at infinity).

## SUMMARY OF THE INVENTION

The present invention provides a multiple-mirror apparatus comprising a first surface (1) which includes a primary mirror (M1) that reflects a beam path (30), a second surface (2) which includes a secondary mirror (M2) that reflects light reflected by the primary mirror (M1), a third surface (3) which includes a tertiary mirror (M3) that reflects light reflected by the secondary mirror (M2) and has a symmetry axis, a fourth surface (4) which includes a quaternary mirror (M4) that reflects light reflected by the tertiary mirror (M3), whereby the surfaces (1, 2, 3, 4) are arranged such that they have a common symmetry axis (Oz) which coincides with the symmetry axis of the tertiary mirror (M3).

Further, the present invention provides a multiple-mirror apparatus wherein the first, second, and fourth mirror (M1, M2, M4) are centered in a first direction (x) perpendicular to an optical axis and off-centered in a second direction (y) perpendicular to the optical axis and to the first direction (x).

Further, the present invention provides a multiple-mirror apparatus wherein the optical axis and the symmetry axis (Oz) coincide.

Further, the present invention provides a multiple-mirror apparatus wherein at least one of the surfaces (1, 2, 3, 4) is rotationally symmetric.

Further, the present invention provides a multiple-mirror apparatus wherein all surfaces (1, 2, 3, 4) are rotationally symmetric.

Further, the present invention provides a multiple-mirror apparatus wherein at least one one of the rotationally symmetric surfaces (1, 2, 3, 4) is aspheric.

Further, the present invention provides a multiple-mirror apparatus wherein the primary mirror (M1) and the quaternary mirror (M4) are concave and the secondary mirror (M2) and the tertiary mirror (M3) are convex.

Further, the present invention provides a multiple-mirror apparatus wherein the primary mirror (M1) and the secondary mirror (M2) are disposed below a plane (Oxz), and the tertiary mirror (M3) is placed above the plane (Oxz).

Further, the present invention provides a multiple-mirror apparatus further comprising an entrance pupil region, wherein the third mirror (M3) defines the size and dimensions of the entrance aperture pupil.

Further, the present invention provides a multiple-mirror apparatus wherein the four mirrors (M1, M2, M3, M4) have respective optical powers the sum of which is substantially zero so as to obtain a flat image focal surface (6).

Further, the present invention provides a multiple-mirror apparatus wherein the third mirror (M3) has a circular shape whereas the first, second and fourth mirrors (M1, M2, M4) have a rectangular shape.

Further, the present invention provides a multiple-mirror apparatus wherein the multiple-mirror apparatus is a telescope.

Further, the present invention provides a multiple-mirror apparatus wherein the respective aspheric surfaces (1, 2, 3, 4) of the four mirrors (M1, M2, M3, M4) are defined for a telescope having an effective focal length of 500mm by the following values with a possible variation of +/-10%

|  | *M1* | *M2* | *M3* | *M4* |
|---|---|---|---|---|
| *R (mm)* | -3565.96 | -2341.512 | 927.696 | 807.857 |
| *K* | 8.115610 | 4.275200 | 0 | -0.225786 |
| *C₁* | -2.70865 E-11 | -5.45677 E-10 | -1.95206 E-10 | 7.93987 E-11 |
| *C₂* | 3.14594 E-17 | -3.47241 E-16 | -8.22935 E-16 | 1.41338 E-16 |

(continued)

|  | M1 | M2 | M3 | M4 |
|---|---|---|---|---|
| $C_3$ | 4.06319 E-24 | 0 | 0 | -5.15897 E-23 |
| $C_4$ | 0 | 0 | 0 | 9.07704 E-28 |

R being the apex radius of the aspheric surface, a positive radius indicating a center of curvature towards the symmetry axis (Oz) of the third mirror, and a negative radius indicates a center of curvature in opposite direction, K is a conical constant, and Ci (i= 1 to 4) are spherical constants.

Further, the present invention provides a multiple-mirror apparatus wherein the respective shapes, sizes and positions in said second direction (y) of the four mirrors (M1, M2, M3, M4) and positions along the symmetry axis (Oz) of the vertex of the aspheric surfaces (1, 2, 3, 4) of the mirrors are defined by the following values with a possible variation of +/- 10%

|  | M1 | M2 | M3 | M4 |
|---|---|---|---|---|
| **Shape** | Rectangular | Rectangular | Circular | Rectangular |
| **x size (mm)** | 848.116 | 375,762 | 115.157 | 446.803 |
| **y size (mm)** | 385.662 | 187.536 | 115.157 | 275.787 |
| **y position (mm)** | -397.451 | -156.475 | 0 | 140.192 |
| **z position (mm)** | 0 | -400 | 0 | -399.3808 |

The invention will be more clearly understood and other features and advantages of the invention will emerge from a reading of the following description given with the reference to the appended drawings.

BRIEF DESCRIPTION OF THE DRAWINGS

Fig. 1 is an yz-view schematic ray path drawing of an optical system according to the invention;
Fig. 2 is a xz-view schematic ray path drawing of the optical system of Fig.1.

DETAILED DESCRIPTION OF THE PREFERRED EMBODIMENT

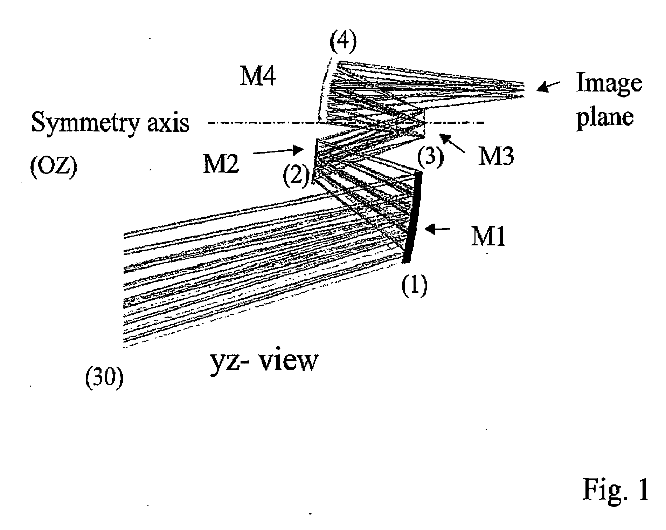

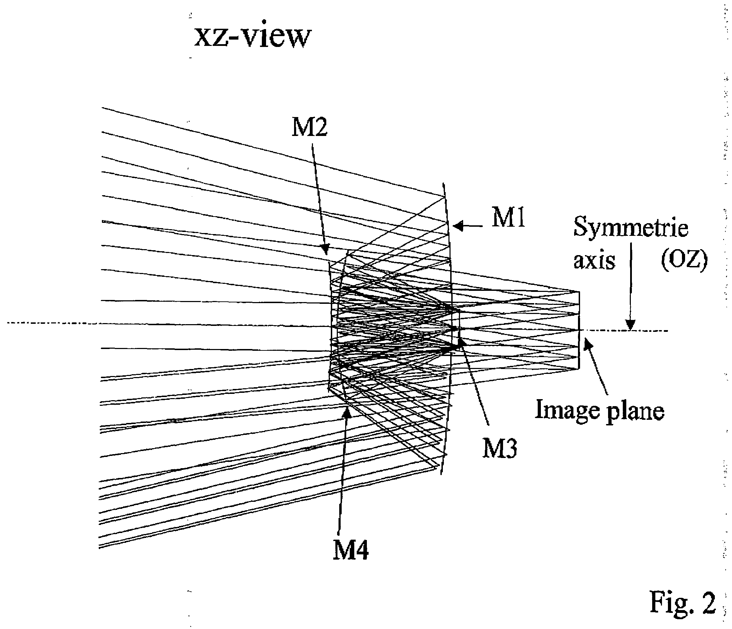

Figs. 1 and 2 are ray path drawings of an all-reflective optical system according to the invention. The optical system comprises four rationally symmetric aspheric surfaces 1, 2, 3, 4 including a primary mirror M1, a secondary mirror M2, a tertiary mirror M3 and a quaternary mirror M4, all being positioned to reflect a beam path 5 to an image plane 6.

The beam path 30 is first reflected by the primary mirror M1 to the secondary mirror M2, which in turn reflects the beam to the tertiary mirror M3. Then, the beam is reflected by the tertiary mirror M3 to the quaternary mirror M4, which in turn forms an image in the focal plane 6. The primary and quaternary mirrors are concave, whereas the secondary and tertiary mirrors are convex. Preferably, the sum of the optical powers of the four mirrors is substantially zero, so that the image formed at the image plane 6 is planar.

The aspheric surfaces 1, 2, 3, 4 (shown in Fig. 1) of the four mirrors have a common optical or symmetry axis Oz coinciding with the symmetry axis of mirror M3. Thus the alignment of the mirrors can be achieved easily.

Mirrors M1, M2 and M4 are off-centered in a direction y perpendicular to z axis (Fig. 1), and centered in a direction x perpendicular to the plane Oxz (Fig.2), mirrors M1 and M2 being disposed below the plane Oxz, whereas mirror M4 is placed above this plane. The diameter of the circular shape of mirror M3 is chosen to define the aperture stop or entrance aperture of the telescope. The advantage of having the aperture stop coinciding with a mirror allows an effective straylight baffling.

With respect to a three-mirror telescope, a four-mirror telescope provides an additional degree of freedom enabling the telescope to be optimized by selecting the features of the four aspheric mirrors while manufacturing of the latter remains feasible.

The rotationally symmetric aspheric surfaces of the mirrors can be defined by the following formula:

$$z = \frac{c \cdot r^2}{1 + \sqrt{1 - (1 + K) \cdot c^2 \cdot r^2}} + \sum_{i=1}^{n} C_i \cdot r^{2(i+1)} , \qquad (1)$$

where $r = \sqrt{x^2 + y^2}$ , (x, y, z) are the coordinates of a point of the mirror surface from the center O of the latter, axis Oz being the symmetry axis of the surface, $c = 1/_R$, R being the apex radius of the aspheric surface, a positive radius indicating the center of curvature is towards z axis, and a negative radius indicates the center of curvature is opposite z axis. Further, K is a conical constant, and $C_i$ (i= 1 to 4) are aspherical constants.

In an exemplary embodiment of the invention of a telescope with an effective focal length of 500 mm, values of constants R, K and $C_i$ defining the rotationally symmetric aspheric surface of each mirror are set in the following table:

TABLE 1

|  | *M1* | *M2* | *M3* | *M4* |
|---|---|---|---|---|
| *R (mm)* | -3565.96 | -2341.512 | 927.696 | 807.857 |
| *K* | 8.115610 | 4.275200 | 0 | -0.225786 |
| $C_1$ | -2.70865 E-11 | -5.45677 E-10 | -1.95206 E-10 | 7.93987 E-11 |
| $C_2$ | 3.14594 E-17 | -3.47241 E-16 | -8.22935 E-16 | 1.41338 E-16 |
| $C_3$ | 4.06319 E-24 | 0 | 0 | -5.15897 E-23 |
| $C_4$ | 0 | 0 | 0 | 9.07704 E-28 |

Mirrors M1, M2 and M4 are manufacturable with normal polishing technology Mirror M3 which is the most sensitive component can be manufactured using the one step ion figuring technique.

The respective shapes, sizes and positions along axis y of the mirrors and positions along axis z of the vertex of the aspheric surfaces of the mirrors can be set as follows.

TABLE2

|  | *M1* | *M2* | *M3* | *M4* |
|---|---|---|---|---|
| *shape* | Rectangular | Rectangular | Circular | Rectangular |
| *x size (mm)* | 848.116 | 375.762 | 115.157 | 446.803 |
| *y size (mm)* | 385.662 | 187.536 | 115.157 | 275.787 |
| *y position (mm)* | -397.451 | -156.475 | 0 | 140,192 |
| *z position (mm)* | 0 | -400 | 0 | -399.3808 |

The image focal plane 6 is located 780 mm from the center O of mirror M3 along axis z. Values of Tables 1 and 2 are given with a possible variation of +/- 10%.

The choice of parameters as defined in Tables 1 and 2 leads to a telescope having the following properties:

- field of view between -13° and +13° (26°) in x direction and between -19° and -16° (6°) in y direction,
- effective focal length = 500mm,
- f-number (focal length / aperture diameter) = 3,5,
- telecentricity in image space,
- transmission ratio greater than 80%,
- flat image plane.

The telescope according to the invention is suitable for pushbroom super- or hyperspectral imaging missions and for Earth observation missions with a very large swath. It is also suitable for being used as a front telescope of spectrometer with a very large slit or multi slit configuration.

**Claims**

1. A multiple-mirror apparatus comprising:

   a first surface (1) which includes a primary mirror (M1) that reflects a beam path (30),
   a second surface (2) which includes a secondary mirror (M2) that reflects light reflected by the primary mirror (M1),
   a third surface (3) which includes a tertiary mirror (M3) that reflects light reflected by the secondary mirror (M2) and has a symmetry axis,
   a fourth surface (4) which includes a quaternary mirror (M4) that reflects light reflected by the tertiary mirror (M3), whereby
   the surfaces (1, 2, 3, 4) are arranged such that they have a common symmetry axis (Oz) which coincides with the symmetry axis of the tertiary mirror (M3).

2. The multiple-mirror apparatus according to claim 1, wherein the first, second, and fourth mirror (M1, M2, M4) are centered in a first direction (x) perpendicular to an optical axis and off-centered in a second direction (y) perpendicular to the optical axis and to the first direction (x).

3. The multiple-mirror apparatus according to claim 2, wherein the optical axis and the symmetry axis (Oz) coincide.

4. The multiple-mirror apparatus according to one of the claims 1 to 3, wherein at least one of the surfaces (1, 2, 3, 4) is rotationally symmetric.

5. The muttiple-mirror apparatus according to claim 4, wherein all surfaces (1, 2, 3, 4) are rotationally symmetric.

6. The multiple-mirror apparatus according to claims 4 or 5, wherein at least one of the rotationally symmetric surfaces (1, 2, 3, 4) is aspheric.

7. The multiple-mirror apparatus according to one of the claims 1 to 6, wherein the primary mirror (M1) and the quaternary mirror (M4) are concave and the secondary mirror (M2) and the tertiary mirror (M3) are convex.

8. The multiple-mirror apparatus according to one of the claims 1 to 7, wherein the primary mirror (M1) and the secondary mirror (M2) are disposed below a plane (Oxz), and the tertiary mirror (M3) is placed above the plane (Oxz).

9. The multiple-mirror apparatus according to one of the claims 1 to 8, further comprising an entrance pupil region, wherein the third mirror (M3) defines the size and dimensions of the entrance aperture pupil.

10. The multiple-mirror apparatus according to one of the claims 1 to 9, wherein the four mirrors (M1, M2, M3, M4) have respective optical powers the sum of which is substantially zero so as to obtain a flat image focal surface (6).

11. The multiple-mirror apparatus according to one of the claims 1 to 10, wherein the third mirror (M3) has a circular shape whereas the first, second and fourth mirrors (M1, M2, M4) have a rectangular shape.

12. The multiple-mirror apparatus according to one of the claims 1 to 11, wherein the multiple-mirror apparatus is a telescope.

13. The multiple-mirror apparatus according to anyone of claims 6 to 12, wherein the respective aspheric surfaces (1, 2, 3, 4) of the four mirrors (M1, M2, M3, M4) are defined for a telescope having an effective focal length of 500mm by the following values with a possible variation of +/-10%

| | *M1* | *M2* | *M3* | *M4* |
|---|---|---|---|---|
| *R (mm)* | -3565.96 | -2341.512 | 927.696 | 807.857 |
| *K* | 8.115610 | 4.275200 | 0 | -0.225786 |
| $C_1$ | -2.70865 E-11 | -5.45677 E-10 | -1.95206 E-10 | 7.93987 E-11 |
| $C_2$ | 3.14594 E-17 | -3.47241 E-16 | -8.22935 E-16 | 1.41338 E-16 |
| $C_3$ | 4.06319 E-24 | 0 | 0 | -5.15897 E-23 |

(continued)

|  | **M1** | **M2** | **M3** | **M4** |
|---|---|---|---|---|
| $C_4$ | 0 | 0 | 0 | 9.07704 E-28 |

wherein R being the apex radius of the aspheric surface, a positive radius indicating a center of curvature towards the symmetry axis (Oz) of the third mirror, and a negative radius indicates a center of curvature in opposite direction, K is a conical constant, and Ci (i= 1 to 4) are spherical constants.

14. The multiple-mirror apparatus according to claim 13, wherein the respective shapes, sizes and positions in said second direction (y) of the four mirrors (M1, M2, M3, M4) and positions along the symmetry axis (Oz) of the vertex of the aspheric surfaces (1, 2, 3, 4) of the mirrors are defined by the following values with a possible variation of +/- 10%

|  | **M1** | **M2** | **M3** | **M4** |
|---|---|---|---|---|
| **Shape** | Rectangular | Rectangular | Circular | Rectangular |
| **x size (mm)** | 848.116 | 375.762 | 115.157 | 446.803 |
| **y size (mm)** | 385.662 | 187.536 | 115.157 | 275.787 |
| **y position (mm)** | -397.451 | -156.475 | 0 | 140.192 |
| **z position (mm)** | 0 | -400 | 0 | -399.3808 |

Fig. 1

EP 1 772 761 A1

# xz-view

M2

M1

Symmetrie axis (OZ)

Image plane

M3

M4

Fig. 2

EP 1 772 761 A1

**EP 1 772 761 A1**

**European Patent Office**

**EUROPEAN SEARCH REPORT**

Application Number

EP 05 02 1859

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 917 879 A (MASHIMA ET AL) 29 June 1999 (1999-06-29) * column 2, line 14 - column 3, line 42; table 1 * | 1-12 | G02B17/06 |
| X | JEWELL T E ET AL: "REFLECTIVE SYSTEMS DESIGN STUDY FOR SOFT X-RAY PROJECTION LITHOGRAPHY" JOURNAL OF VACUUM SCIENCE AND TECHNOLOGY: PART B, AMERICAN INSTITUTE OF PHYSICS. NEW YORK, US, vol. 8, no. 6, 1 November 1990 (1990-11-01), pages 1519-1523, XP000169155 ISSN: 1071-1023 * paragraph [0VII]; figure 3 * | 1-12 | |
| X | US 5 477 395 A (COOK ET AL) 19 December 1995 (1995-12-19) * column 3, lines 1-34; figures 3-6; table 1 * | 1-6,8,12 | |
| X | EP 0 601 871 A (HUGHES AIRCRAFT COMPANY) 15 June 1994 (1994-06-15) * page 3, line 10 - page 4, line 56; figures 1,2 * | 1-6,8-12 | TECHNICAL FIELDS SEARCHED (IPC) G02B |
| X | US 4 812 030 A (PINSON ET AL) 14 March 1989 (1989-03-14) * figures 3A,3B,3C * | 1,4,5,7, 10,12 | |

The present search report has been drawn up for all claims

| Place of search | Date of completion of the search | Examiner |
|---|---|---|
| Munich | 21 November 2005 | Casse, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

10

## ANNEX TO THE EUROPEAN SEARCH REPORT
## ON EUROPEAN PATENT APPLICATION NO.

EP 05 02 1859

This annex lists the patent family members relating to the patent documents cited in the above-mentioned European search report.
The members are as contained in the European Patent Office EDP file on
The European Patent Office is in no way liable for these particulars which are merely given for the purpose of information.

21-11-2005

| Patent document cited in search report | | Publication date | Patent family member(s) | | Publication date |
|---|---|---|---|---|---|
| US 5917879 | A | 29-06-1999 | JP | 9251097 A | 22-09-1997 |
| US 5477395 | A | 19-12-1995 | GB | 2295030 A | 15-05-1996 |
| EP 0601871 | A | 15-06-1994 | CA | 2110968 A1 | 12-06-1994 |
| | | | JP | 2716933 B2 | 18-02-1998 |
| | | | JP | 6273671 A | 30-09-1994 |
| | | | US | 5331470 A | 19-07-1994 |
| US 4812030 | A | 14-03-1989 | NONE | | |

EPO FORM P0459

For more details about this annex : see Official Journal of the European Patent Office, No. 12/82

**EP 1 772 761 A1**

**Patent documents cited in the description**

- US 4101195 A
- US 4226501 A
- US 4240707 A
- US 5142417 A
- US 5640283 A
- US 6767103 B